# EUROPÄISCHE PATENTSCHRIFT

(11) **EP 2 927 838 B1**
(45) Veröffentlichungstag und Bekanntmachung des Hinweises auf die Patenterteilung: **16.03.2016**
(21) Anmeldenummer: 14163115.0
(22) Anmeldetag: 02.04.2014
(51) Int. Cl.: G06K 7/00

(54) **Vorrichtung und Verfahren zum Identifizieren und Lokalisieren von Objekten**
System and method for identifying and locating objects
Dispositif et procédé d'identification et de localisation d'objets

(43) Veröffentlichungstag der Anmeldung: 07.10.2015
(73) Patentinhaber: SICK AG, 79183 Waldkirch (DE)
(72) Erfinder: Stimming, Dr. Christian, 22767 Hamburg (DE); Rapp, Dr. Christian, 22307 Hamburg (DE)
(74) Vertreter: Hehl, Ulrich

(56) Entgegenhaltungen:
- US-A- 6 150 948
- US-A1- 2009 207 024
- US-A1- 2010 060 453
- US-A1- 2012 044 074

## Beschreibung

Die Erfindung betrifft eine Vorrichtung und ein Verfahren zum Identifizieren und Lokalisieren von Objekten nach dem Oberbegriff von Anspruch 1 beziehungsweise 12.

Zur Automatisierung von logistischen Bewegungen ist die möglichst fehlerfreie Identifikation von Objekten und Waren erforderlich. Dies geschieht an Identifikationspunkten, vor allem bei einem Wechsel des Besitzers der Ware oder einem Wechsel des Transportmittels oder zur Koordinierung von Fahrzeugbewegungen. Ein automatisierendes Identifikationssystem wird demnach beispielsweise bei einem Wareneingang eines Logistikzentrums installiert, um eingehende und ausgehende Waren zu verzeichnen. Dies führt zu schnellen und nachvollziehbaren Logistikbewegungen. Weitere wichtige Anwendungen für die automatische Identifikation sind logistische Verteilerzentren, etwa von Paketversendern, oder die Gepäckaufgabe in Flughäfen.

Mit der RFID-Technologie (Radio Frequency Identification) ist man in der Lage, RFID-Antennen ("Transponder" oder "Tags") auch im industriellen Umfeld zu detektieren. Dabei kann insbesondere eine eindeutige Identifikationsnummer ausgelesen werden. RFID-Transponder können prinzipiell aktiv sein, also eine eigene Energieversorgung aufweisen und selbstständig elektromagnetische Strahlung erzeugen. In der Praxis eignen sich diese Transponder für ein industrielles Umfeld und die Logistik aber weniger, weil durch die Energieversorgung die Stückpreise solcher Transponder nicht das für den Massenmarkt erforderliche geringe Niveau erreichen können. Deshalb werden zumeist preisgünstige passive Transponder ohne eigene Energieversorgung eingesetzt. In beiden Fällen wird durch elektromagnetische Strahlung des Lesegerätes der Transponder zur Abstrahlung der gespeicherten Information angeregt, wobei passive Transponder die notwendige Energie aus der Sendeenergie des Lesesystems beziehen.

Neben dem Auslesen der Information, die der Transponder trägt, verlangen Anwendungen oft auch die genaue örtliche Lokalisierung von mehreren auf kleinem Raum verteilten Transpondern. Beim etablierten Ultrahochfrequenzstandard ISO 18000-6 werden passive Transponder nach dem Backscatter-Verfahren ausgelesen. Der Erfassungsbereich für eine Antenne ist relativ groß. Durch die Antennencharakteristik mit einem Öffnungswinkel von ca. 60° und einer Erfassungsreichweite von zumindest einigen Metern kann innerhalb von mehreren Raummetern mit den dort befindlichen Transpondern kommuniziert werden. Eine gewisse indirekte Aussage über den Aufenthaltsort der Transponder gibt das Lesegerät demnach an. Die Streuung der Position entspricht aber der Ausdehnung des Lesebereichs und beträgt damit mehrere Meter. Eine genauere Lokalisierung ist damit zunächst nicht möglich. Auch eine Begrenzung des Erfassungsbereichs durch spezielle Antennencharakteristiken oder der Erfassungsreichweite, beispielsweise über die Sendeleistung, löst das Lokalisierungsproblem nur bedingt, zumal eine Beschneidung des Lesebereichs oft gar nicht gewünscht ist.

Sofern dann nicht garantiert ist, dass sich in dem relativ großen Lesebereich nur ein mit einem Transponder versehenes Objekt befindet, entstehen Mehrdeutigkeiten. Dabei ist Vereinzelung, also die Zuordnung einer RFID-Lesung zu einem bestimmten Transponder, zumindest im Standard ISO 18000-6 noch durch das Protokoll gelöst, indem jeweils nur ein bestimmter Transponder zum Senden aufgefordert wird. Damit kann aber in Situationen wie im Falle von Paketen auf einer Palette, in denen eine Vielzahl von Transpondern anwesend ist, keine örtliche Zuordnung getroffen und damit nicht festgestellt werden, wo genau sich Transponder befinden und zu welchem Objekt sie gehören.

Sofern sich die mit den Transpondern versehenen Objekte auf einem Förderband in einer Richtung bewegen, ist die Lokalisierung durch diese Randbedingung erleichtert. An derartigen Förderanlagen kann nämlich von einer über den sensierten Förderanlagenabschnitt bekannten linearen Translation ausgegangen werden und es ist unter diesen Voraussetzungen ausreichend, die Position der Transponder einmalig an einer ermittelbaren Stelle zu einem ermittelbaren Zeitpunkt zu bestimmen. Eine typische Anwendung ist die Zuordnung eines Transponders zu einem bestimmten Objekt oder Paket, da die Lesereihenfolge nicht notwendig auch der Reihenfolge der Objekte auf dem Förderband entspricht. Auch an Förderanlagen wird wegen des großen Erfassungsbereichs in Translationsrichtung nur eine Ortsauflösung von einigen Dezimetern bis Metern erreicht. Zahlreiche Fehlerquellen stören die Genauigkeit zusätzlich, etwa eine Variabilität durch die Orientierung des Transponders, Feldinhomogenitäten und vor allem Mehrfachstreuungen und Echos. Auch das derart erleichterte Lokalisierungs- und Zuordnungsproblem bedarf demnach noch einer Lösung.

Es gibt im Stand der Technik Ansätze, mit einem RFID-Leser nicht nur die im Transponder gespeicherten Informationen auszulesen, sondern den Transponder auch mit Hilfe des RFID-Signals zu lokalisieren. Dabei wird jeweils der Abstand des Transponders geschätzt, mit unterschiedlichen Ansätzen wie der Auswertung der Phaseninformation, des RSSI (Received Signal Strength Indicator) oder der Signallaufzeit. Die Lokalisierung erfolgt dann durch mehrere Messungen an unterschiedlichen Positionen des Transponders beziehungsweise des RFID-Lesers oder mit Hilfe örtlich versetzter Antennen. Die Lokalisierung von passiven Transpondern ist unter anderem wegen deren Antwortverhalten technisch besonders aufwändig. Eine einfache, genaue Lokalisierung wird mit diesen Ansätzen nicht erreicht. Beispielsweise beträgt die Ortsauflösung aufgrund des RSSI immer noch bis zu mehrere Meter.

Aus der DE 199 404 03 A1 ist bekannt, zusätzlich zu dem RFID-Leser einen optischen Sensor einzusetzen. Der optische Sensor kann die Position von Transpondern erfassen, und durch Abgleich optischer Informationen, wie Strichcodes, dem Remissionsverhalten oder der äußeren Geometrie von Objekten, mit in dem Transponder gespeicherten Informationen erfolgt dann eine Zuordnung. Das funktioniert demnach nur, wenn in dem Transponder eigens entsprechende optische Informationen zu dessen Identifikation gespeichert werden.

Die EP 2 012 253 B1 kombiniert einen RFID-Leser mit einem Laserscanner. In dem Laserscanner sind mehrere Felder konfiguriert, die in einer bestimmten Reihenfolge von einem Objekt durchquert werden müssen. Nur dann wird eine RFID-Lesung ausgelöst beziehungsweise dem auslösenden Objekt zugeordnet. Dieser Ansatz erfordert, dass zu identifizierende Objekte nur bestimmten Bewegungsbahnen folgen, insbesondere an einem Durchgang oder RFID-Tor. Es handelt sich damit weniger um eine Lokalisierung, da der Ort des Transponders vorgegeben wird und dieser nicht frei beweglich ist, sondern vielmehr um ein Festlegen von geeigneten Lesezeitpunkten immer dann, wenn sich ein Transponder an dem vorgegebenen Identifikationspunkt befindet. Durch die feldbezogene Erfassung ist zudem die Ortsauflösung des Laserscanners relativ gering. Es ist zwar an sich bekannt, mit einem Laserscanner Objekte auch genauer zu lokalisieren und deren Bewegungsbahn zu verfolgen (Objekttracking). Das wäre aber in der EP 2 012 253 B1 sogar kontraproduktiv, denn im Gegensatz zu der durch Felder erfassten groben Bewegungsbahn, die durch das Passieren des RFID-Lesers erzwungen wird, wäre die genaue Bewegungsbahn der Objekte vorab gar nicht bekannt und müsste doch nur ähnlich wie mit Feldern abstrahiert werden, um zu entscheiden, ob ein Objekt den RFID-Leser in einer für eine RFID-Lesung vorgesehenen Weise passiert oder nicht.

Aus der Arbeit von R. Miesen et al., "Holographie Localization of Passive UHF RFID Transponders", IEEE International Conference on RFID, 2011, S. 32-37, ist ein phasenbasiertes Lokalisierungsverfahren für passive RFID-Transponder bekannt. Dabei werden während der Bewegung der lesenden Antenne längs einer bekannten Trajektorie mehrere Phasenmessungen des RFID-Signals eines ortsfesten Transponders vorgenommen. Daraus wird eine örtliche Wahrscheinlichkeitsverteilung überlagert, aus welcher die Transponderposition ermittelt wird. Ein auf einer bekannten Trajektorie bewegter RFID-Leser entspricht jedoch oft nicht den Anforderungen an eine industrielle Anwendung, wo der RFID-Leser ruht und der Transponder sich bewegt oder, im Falle der Navigation mit einem bewegten RFID-Leser auf einem Fahrzeug, die Trajektorie gerade nicht bekannt ist. Eine Zuordnung einer Vielzahl von Transpondern zu Objekten wird in der Arbeit nicht angesprochen.

Die DE 10 2009 030 076 A1 befasst sich ebenfalls mit der Lokalisierung eines Objekts mit einem wellenbasierten Sensor aufgrund von Restphasen mit holographischer Rekonstruktion. Auch hier wird die Antenne zum Erzeugen einer synthetischen Apertur auf einer bekannten oder mit Beschleunigungssensoren geschätzten Trajektorie bewegt.

Die US 2012/0044074 A1 offenbart ein Diebstahlerkennungssystem, das üblicherweise an einem Ausgangsbereich montiert wird und bei Erfassung eines RFID-Tags, mit dem ein zu sichernder Artikel versehen ist, einen Alarm auslöst. Um den RFID-Leser nur dann mit hoher Leistung und damit größerem Erfassungsbereich zu aktivieren, wenn auch eine potentielle Diebstahlsituation besteht, ist ein Näherungssensor vorgesehen. Der RFID-Sensor befindet sich in einer Art Ruhemodus, in dem kein Alarm ausgelöst wird, bis ihn der Näherungssensor bei Erkennen eines Objekts in den eigentlichen Lesemodus versetzt. Die unabhängigen Ansprüche sind gegenüber diesem

Dokument abgegrenzt.

In der US 2009/0207024 A1 ist ein RFID-Leser an einem Gabelstapler montiert, der erkennt, ob ein gelesenes RFID-Tag Teil seiner Ladung ist oder nicht. Dazu wird vorab die Geometrie der Ladefläche eingelernt. Im Betrieb wird dann anhand des RFID-Signals der Abstand zu einem gelesenen RFID gemessen und mit der bekannten Geometrie verglichen.

Die US 2010/0060453 A1 beschreibt ein Warenmanagementsystem mit einem optischen Sensor und einem RFID-Leser. Der optische Sensor erkennt, in welches Fach eines Regalsystems ein Eingriff erfolgt. Es wird dann geprüft, ob im gleichen Zeitfenster eine neue RFID-Information gelesen wurde. In diesem Fall wird die RFID-Information dem Fach des erkannten Eingriffs zugeordnet.

Aus der US 6 150 948 ist ein tragbarer RFID-Leser bekannt, der mit einem InfrarotSensor erkennt, ob sich ein Objekt im Lesebereich befindet. Um Energie zu sparen, wird der RFID-Leser nur bei Anwesenheit eines Objekts aktiviert.

Es ist daher Aufgabe der Erfindung, das Identifizieren und Lokalisieren von Objekten mit RFID-Transpondern zu verbessern.

Diese Aufgabe wird durch eine Vorrichtung und ein Verfahren zum Identifizieren und Lokalisieren von Objekten nach Anspruch 1 beziehungsweise 12 gelöst. Als Basis stehen dabei einerseits von einer Positionsbestimmungseinrichtung Positionsdaten der Objekte zur Verfügung. Außerdem liest eine RFID-Leseeinrichtung RFID-Informationen aus RFID-Transpondern aus, also zumindest Teile der dort gespeicherten Daten und insbesondere eine eindeutige Identifikation. Die Erfindung geht dann von dem Grundgedanken aus, die Objekte durch kombinierten Einsatz der Positionsbestimmungseinrichtung und der RFID-Leseeinrichtung gleichzeitig zu lokalisieren und zu identifizieren. Dabei werden Transponderpositionen aus dem RFID-Signal bestimmt, und es erfolgt eine Zuordnung von Objekten und Transpondern anhand der Objektpositionen und der Transponderpositionen.

Hierbei sind zumindest zwei Szenarien denkbar. Einmal etabliert die Zuordnung die Lokalisierung. Dann ist die Lokalisierung anhand des RFID-Signals nur eine Hilfsgröße mit möglicherweise geringer Genauigkeit, um das von der Positionsbestimmungseinrichtung geortete Objekt einer bestimmten RFID-Lesung und damit einem Transponder zuzuordnen. Eine genaue Lokalisierung erfolgt erst aufgrund der Zuordnung durch die Positionsdaten der Positionsbestimmungseinrichtung. In einem anderen Fall ortet die Lokalisierung der RFID-Leseeinrichtung den Transponder bereits mit ausreichender Genauigkeit, und die Positionsbestimmungseinheit dient der Validierung beziehungsweise redundanten Lokalisierung, wobei letzteres durch Verrechnen auch zu einer weiteren Erhöhung der Positionsgenauigkeit genutzt werden kann.

Die Erfindung hat den Vorteil, dass durch die Kombination aus Objektpositionsbestimmung, RFID-Lesen und Transponderpositionsbestimmung Objekte zugleich identifiziert und lokalisiert werden. Das funktioniert für ein vereinzeltes Objekt mit einem Transponder ebenso wie für mehrere Objekte und mehrere Transponder und insbesondere auch ein Objekt, das über mehrere Transponder verfügt, beispielsweise eine Palette mit mehreren dicht gestapelten Paketen, wobei jedes einzelne Objekt mindestens einen Transponder tragen kann. Die Lokalisierung erfolgt mit hoher Positionsgenauigkeit auch für völlig frei bewegliche Objekte. Mit der Identifikation und Lokalisierung ergibt sich auch der Zugang zu weiteren auf dem Transponder gespeicherten Daten mit dieser hohen Positionsgenauigkeit. Dabei können auch Echtzeitanforderungen etwa bei dem Materialfluss in industriellen Fertigungsumgebungen erfüllt werden.

Die Positionsbestimmungseinrichtung weist bevorzugt einen Laserscanner auf. Dieser Laserscanner erfasst Objektpositionen beispielsweise durch Entfernungsmessung mit einem puls- oder phasenbasierten Lichtlaufzeitverfahren. Dadurch sind mit einer jeweils bekannten Winkelstellung die Objektpositionen in zweidimensionalen Polar- oder sogar dreidimensionalen Kugelkoordinaten erfasst. Der Laserscanner kann eine sehr hohe Ortsauflösung erreichen und so eine hochgenaue Lokalisierung ermöglichen. Alternativ zu einem Laserscanner als Quelle der Positionsdaten kommt auch die Zuhilfenahme einer zumindest teilweisen Zwangsführung in Betracht, etwa durch ein Förderband, an dem eine Triggerlichtschranke passierende Objekte erfasst. Nochmals alternativ können die Objekte selbst ihre Position übermitteln, etwa bei einer Eigenpositionsbestimmung eines Fahrzeugs.

Die Positionsbestimmungseinrichtung ist bevorzugt für ein Objekttracking ausgebildet. Es werden dabei nicht nur die momentanen Positionen von Objekten erfasst, sondern über mehrere Messungen Objekttrajektorien rekonstruiert. Dadurch sind zeitabhängige Objektpositionen verfügbar, und es gibt eine klare zeitliche Zuordnung, die zu allen betrachteten Zeitpunkten die erfassten Objekte wiedererkennt.

Die RFID-Lokalisierungseinrichtung ist bevorzugt für eine Phasenmessung zur Abstandsbestimmung ausgebildet. Genaugenommen wird die Restphase modulo 2π bestimmt, und das führt zu Mehrdeutigkeiten, die bei einer Wellenlänge in der Größenordnung von 30 cm bei UHF-RFID sehr relevant sind. Selbst wenn eine eindeutige Abstandsmessung gelingen würde, fehlte damit nach einer Einzelmessung immer noch ein Freiheitsgrad für eine zumindest zweidimensionale Positionsbestimmung. Auch eine eindimensionale, mehrdeutige Abstandsinformation kann aber in manchen Situationen genügen, um eine eindeutige Zuordnung zwischen Objekt und Transponder zu finden oder zumindest einige mit der Abstandsinformation unverträgliche Zuordnungen auszuschließen. Alternativ zu einer Phasenmessung kann der Abstand auch durch ein Laufzeitverfahren oder den RSSI bestimmt werden.

Die RFID-Lokalisierungseinrichtung ist bevorzugt dafür ausgebildet, zum Bestimmen einer Transponderposition zu mehreren Zeitpunkten eine Abstandsinformation aus dem RFID-Signal eines Transponders zu bestimmen, aus der Abstandsinformation Aufenthaltswahrscheinlichkeiten abzuleiten und in einem Wahrscheinlichkeitsgitter zu überlagern. Dieses Vorgehen wird auch als holographische Lokalisation bezeichnet. Die Abstandsinformation zu mehreren Zeitpunkten, also aus einer Vielzahl von Messungen, wird nach und nach in einer als Wahrscheinlichkeitsgitter bezeichneten 2D-Karte überlagert. Eine Erweiterung auf drei Dimensionen ist ohne Weiteres möglich, aber für viele Anwendungen nicht erforderlich. Das Wahrscheinlichkeitsgitter ist dazu in Bins oder Pixel einer Größe entsprechend der gewünschten Ortsauflösung der Lokalisierung aufgeteilt. In den Pixeln wird jeweils eingetragen, wie es wahrscheinlich gemäß der betrachteten Einzelmessung anhand der Abstandsinformation ist, dass sich die Signalquelle an dem von dem Pixel repräsentierten Ort befindet. Eine Einzelmessung eines Abstands ergibt eine Kreislinie erhöhter Wahrscheinlichkeit, während die Orte, die sich nicht auf der Kreislinie befinden, mit der Abstandsmessung weniger gut oder nicht verträglich sind. Liegt der Abstandsinformation eine Phasenmessung zugrunde, ergeben sich wegen der Periodizität mehrere konzentrische Kreise im Abstand der Wellenlänge beziehungsweise Trägerfrequenz des RFID-Signals. Bewegt sich nun das Zentrum dieser Kreise von Einzelmessung zu Einzelmessung, weil sich Transponder und RFID-Leseeinrichtung in einer Relativbewegung befinden, so überlagern sich die Wahrscheinlichkeiten an den meisten Orten statistisch oder destruktiv und nur am tatsächlichen Ort der Signalquelle konstruktiv, im Idealfall in einem einzigen Pixel, wo sich Kreise aller Einzelmessungen schneiden.

Die RFID-Lokalisierungseinrichtung ist bevorzugt dafür ausgebildet, die Abstandsinformation auf eine Objektposition zu beziehen. Die in dem Wahrscheinlichkeitsgitter überlagerten Aufenthaltswahrscheinlichkeiten sind demnach an den Objektpositionen der Positionsbestimmungseinrichtung aufgehängt. Anschaulich gesprochen sind die im vorigen Abschnitt genannten Kreise in jeder Einzelmessung um die zugehörige Objektposition und nicht etwa um die RFID-Lesevorrichtung zentriert. Deshalb kann die RFID-Lesevorrichtung in Ruhe bleiben. Würde man dagegen die Aufenthaltswahrscheinlichkeiten auf eine ruhende RFID-Lesevorrichtung beziehen, so ergäbe sich wegen des gemeinsamen Mittelpunkts der Kreise aller Einzelmessungen kein Schnittpunkt maximaler konstruktiver Überlagerung.

Die RFID-Lokalisierungseinrichtung ist bevorzugt dafür ausgebildet, die Abstandsinformation auf eine Objektposition zu beziehen, indem aus der Objektposition eine dem Abstand zwischen Objekt und RFID-Leseeinrichtung entsprechende ideale Phase und dann die Phasendifferenz zwischen idealer Phase und Phase des RFID-Signals berechnet wird. Dafür wird also zunächst aus den Objektpositionen eine theoretische oder ideale Phase rekonstruiert, die für ein RFID-Signal von einem Transponder an dieser Objektposition gemessen würde. Anschließend wird die aus einem RFID-Signal bestimmte Phase auf den Ort des Objekts umgerechnet, indem die Differenz mit der idealen Phase gebildet wird. Auf diese Weise fließen die hochgenauen Positionsdaten schon sehr früh und insbesondere vor der Zuordnung von Objekten und Transponder in die Bestimmung von Transponderpositionen aus dem RFID-Signal ein.

Die RFID-Lokalisierungseinrichtung ist bevorzugt dafür ausgebildet, jeweils ein Wahrscheinlichkeitsgitter je Objekt und RFID-Transponder zu bilden. Jedes Wahrscheinlichkeitsgitter bildet damit eine Hypothese für ein bestimmtes Paar Objekt-Transponder, und aus der konstruktiven oder destruktiven Überlagerung der Einzelmessungen lässt sich erkennen, wie wahrscheinlich diese Zuordnungshypothese ist. Um alle Zuordnungsmöglichkeiten abzudecken, werden für *n* Objekte und *m* Transponder bis zu *n* x *m* Wahrscheinlichkeitsgitter erzeugt.

Die RFID-Lokalisierungseinrichtung ist bevorzugt dafür ausgebildet, ein globales Maß eines Wahrscheinlichkeitsgitters zu bestimmen. Damit soll die Aussage des Wahrscheinlichkeitsgitters auf einen einfach handhabbaren Wert, insbesondere einen Skalar oder Prozentsatz, kondensiert werden. Das globale Maß ist ein Gütemaß für die dem Wahrscheinlichkeitsgitter zugrundeliegende Hypothese, dass also der Transponder und das Objekt zusammengehören, aus dessen Positionsdaten und RFID-Signalen das Wahrscheinlichkeitsgitter gebildet wurde. Das globale Maß kann einfach das Pixel mit dem maximalen Wert sein, denn dort war die konstruktive Überlagerung und damit die Aufenthaltswahrscheinlichkeit am größten. Andere Maße sind denkbar, etwa die Integration über eine gewisse Nachbarschaft von Pixeln, denn nicht zwingend enthält die stärkste Wahrscheinlichkeitswolke auch das Einzelpixel mit dem höchsten Wert, etwa bei Ausreißern durch Fehlmessungen.

Die RFID-Lokalisierungseinrichtung ist bevorzugt dafür ausgebildet, ein Wahrscheinlichkeitsgitter nur für eine Umgebung einer Position der RFID-Leseeinrichtung zu bilden und/oder auszuwerten. Mit Umgebung ist eine unmittelbare Nachbarschaft beispielsweise einiger oder einiger zehn Pixel gemeint. Die Umgebung ist damit insbesondere kleiner oder sogar klein gegen die Leserreichweite. Die Beschränkung auf die Umgebung der Position der RFID-Leseeinrichtung führt zu deutlich geringerem Speicher- und Rechenaufwand. Dabei ist denkbar, diese Begrenzung schon beim Bilden der Wahrscheinlichkeitsgitter oder erst bei dessen Auswertung zum Auffinden des globalen Maßes vorzunehmen. Der Beschränkung auf die Umgebung der RFID-Leseeinrichtung liegt die Überlegung zugrunde, dass Pixel außerhalb dieser Umgebung ohnehin keiner plausiblen Hypothese entsprechen. Da nämlich in dieser Ausführungsform die in das Wahrscheinlichkeitsgitter eingetragenen Aufenthaltswahrscheinlichkeiten auf eine Objektpositionen als potentielle Transponderposition bezogen sind, muss sich eine maximale Überlagerung einer zutreffenden Hypothese in der Signalquelle bilden, nämlich bei der RFID-Leseeinrichtung. Zur Vereinfachung kann der Ursprung der Wahrscheinlichkeitsgitter an die Position der RFID-Leseeinrichtung gelegt werden, so dass dann eine Umgebung des Ursprungs betrachtet wird.

Die Zuordnungseinrichtung ist bevorzugt dafür ausgebildet, bei der Zuordnung von Objekten und RFID-Transpondern eine auf dem globalen Maß basierende Kostenfunktion zu optimieren. Die Eingangsdaten für die Zuordnungsoptimierung sind die in dem globalen Maß kondensierten Wahrscheinlichkeitsaussagen über die Zugehörigkeit eines Transponders zu einem Objekt für alle denkbaren Paare. Es genügt nun nicht, jedem Objekt den Transponder mit maximaler Wahrscheinlichkeit zuzuordnen oder umgekehrt. Das optimiert nicht notwendig die Zuordnung als Ganzes. Außerdem ist a priori keineswegs klar, dass jedes mit Positionsdaten erfasste Objekt genau einen Transponder trägt. Die mit der Zuordnung optimierte Kostenfunktion hängt mit dem globalen Maß zusammen, muss aber nicht identisch sein. Beispielsweise können Gewichtungen eingeführt werden, oder Randbedingungen derart, dass Zuordnungen bei Wahrscheinlichkeiten unterhalb einer Schwelle nicht zugelassen werden oder Zuordnungen mit einer Wahrscheinlichkeit oberhalb einer Schwelle wenn irgend konsistent möglich beibehalten werden. So findet die Zuordnungseinrichtung eine Zuordnung von Objekten und Transpondern, die insgesamt die plausibelste ist. Ein derartiges Verfahren zur Lösung gewichteter Zuordnungsprobleme an sich ist bekannt, beispielsweise die ungarische Methode beziehungsweise der Kuhn-Munkres-Algorithmus.

Die Positionsbestimmungseinrichtung ist bevorzugt dafür ausgebildet, Konturinformationen der Objekte zu bestimmen, wobei die Zuordnungseinrichtung die Konturinformationen bei der Zuordnung von Objekten und RFID-Transpondern einbezieht. Solche Konturdaten werden insbesondere von einem Laserscanner mit den Objektpositionen mit erfasst. Über die Konturdaten kann Vorwissen darüber einfließen, ob bei bestimmten Objekten Transponder erwartet werden. Beispielsweise tragen je nach Anwendung Personen keine Transponder oder in einem Sicherheitsbereich stets einen Transponder. Quaderförmige Objekte können Kisten oder Pakete mit genau einem oder mindestens einem Transponder sein. An einer Palette werden viele dicht gepackte, vom Laserscanner möglicherweise nicht unterschiedene Objekte mit einer Vielzahl von Transpondern erwartet. Sehr kleine Objekte sind eher Störer ohne Transponder.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Vorzugsweise wird für jedes mögliche Paar eines Objekts und eines RFID-Transponders ein Wahrscheinlichkeitsgitter gebildet, in dem aus mehreren Auswertungen der Phase des RFID-Signals zu verschiedenen Zeitpunkten Aufenthaltswahrscheinlichkeiten überlagert werden, wobei eine hohe Aufenthaltswahrscheinlichkeit jeweils an Orten besteht, die der Phasendifferenz aus einer dem Abstand zwischen Objekt und RFID-Leseeinrichtung entsprechende idealen Phase und der Phase des RFID-Signals entsprechen. Damit wird für jede denkbare Zuordnung eines Transponders zu einem Objekt eine Hypothese gebildet und eine holografische Lokalisierung durchgeführt, die auf die jeweilige Objektposition bezogen ist, beispielsweise indem nach jeder Einzelmessung die kumulierte Wahrscheinlichkeit von Pixeln auf der Phasendifferenz entsprechenden Kreislinien deutlich erhöht und überall sonst abgesenkt wird.

Aus den Wahrscheinlichkeitsgittern wird dann vorzugsweise jeweils ein globales Maß für die Wahrscheinlichkeit bestimmt, dass derjenige RFID-Transponder und dasjenige Objekt zusammengehören, zu dem das Wahrscheinlichkeitsgitter gebildet wurde, und bei der Zuordnung von Objekten und RFID-Transpondern wird eine Kostenfunktion optimiert, die auf den globalen Maßen basiert. So werden die von den Wahrscheinlichkeitsgittern repräsentierten Zuordnungshypothesen auf einen einfachen Wert kondensiert und sind damit einem Verfahren für eine Zuordnungsoptimierung zugänglich.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung einer Vorrichtung zum Identifizieren und Lokalisieren mit einem RFID-Leser und einem Laserscanner;
- Fig. 2: eine Draufsicht auf eine beispielhafte Anordnung der Vorrichtung gemäß Figur 1 an einem Bereich mit mehreren Objekten und Transpondern;
- Fig. 3: eine Darstellung zur Erläuterung der Restphase bei einer phasenbasierten Abstandsmessung;
- Fig. 4: ein beispielhaftes Wahrscheinlichkeitsgitter, mit dessen Hilfe in einer holografischen Lokalisation der Ort einer Signalquelle rekonstruiert wird; und
- Fig. 5: ein Ablaufdiagramm zur Erläuterung der Verfahrensschritte in einer Ausführungsform der Identifikation und Lokalisation von Objekten.

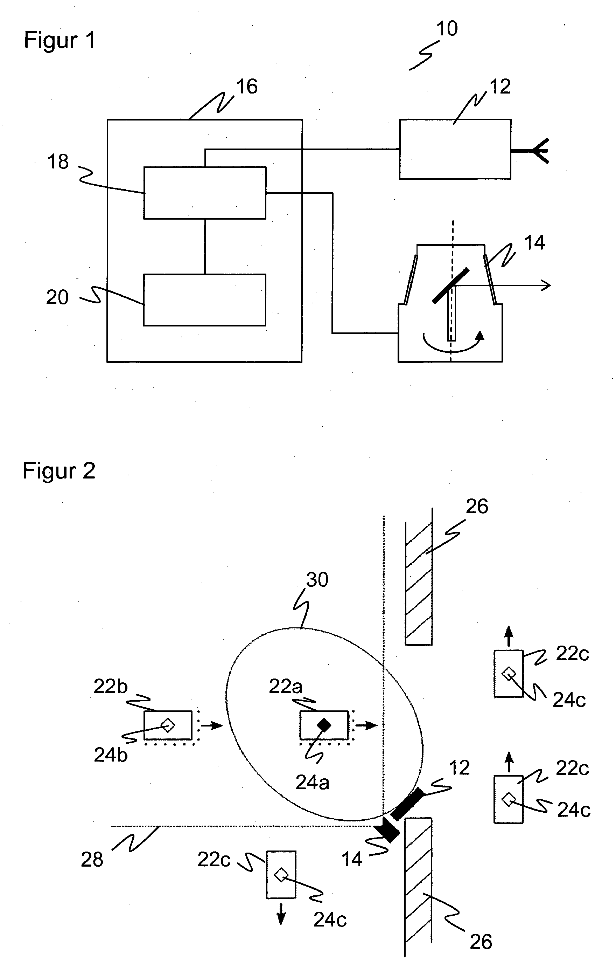

Figur 1 zeigt eine schematische Darstellung einer Vorrichtung 10 zum Identifizieren und Lokalisieren von Objekten. Die Vorrichtung 10 umfasst einen RFID-Leser 12, einen Laserscanner 14 sowie eine Steuer- und Auswertungseinheit 16. Diese Trennung in drei Blöcke ist nur funktionell zu verstehen. Die Steuer- und Auswertungsfunktionalität kann ebenso in den RFID-Leser 12 und/oder den Laserscanner 14 integriert oder nahezu beliebig verteilt sein. Denkbar ist auch, RFID-Leser 12 und Laserscanner 14 als gemeinsames Gerät auszubilden.

Der RFID-Leser 12 arbeitet beispielsweise nach dem UHF-Standard ISO 18000-6 bzw. EPCglobal UHF Gen 2 mit passiven Transpondern. Die Erfindung ist aber weder auf passive Transponder, UHF-Signale noch gar auf einen speziellen UHF-Standard beschränkt, da sie lediglich allgemeine Welleneigenschaften der RFID-Signale nutzt. Der Frequenzbereich für die Trägerfrequenz liegt in dem bezeichneten Standard bei 868 MHz, damit beträgt die Wellenlänge ungefähr 34 cm. Die Kommunikation zwischen Leser und Transponder ist halbduplex, d. h. die Sendeantenne sendet ständig ein Signal zur Energieversorgung, aber Downlink und Uplink wechseln einander sequentiell ab. Der Uplink, also die Kommunikation von Transponder zu Leser, erfolgt durch Backscattermodulation des Transponders und dessen linear polarisierter Antenne, während der Leser ein CW-Signal mit bekannter Frequenz aussendet. Das standardisierte Protokoll stellt die Vereinzelung eines Transponders aus der im Erfassungsbereich befindlichen Transponderpopulation sicher, indem nur ein einzelner, über seine ID bekannter Transponder in jeder Uplink-Sequenz aktiv ist.

Der Laserscanner 14 umfasst eine drehbare Ablenkeinheit, insbesondere einen Drehspiegel, und tastet im Verlauf der Drehbewegung mit einem Laserlichtstrahl eine Überwachungsebene ab. Dabei wird vorzugsweise die Lichtlaufzeit zu einem angetasteten Objekt und damit dessen Abstand bestimmt. Außerdem wird, etwa über einen Encoder, die jeweilige Winkelstellung erfasst. Damit werden von dem Laserscanner 14 Objektpositionen von Objekten in der Überwachungsebene in zweidimensionalen Koordinaten und bei Bedarf auch Objektkonturen zur Verfügung gestellt. Durch zusätzliches Verkippen der Überwachungsebene können auch dreidimensionale Laserscanner geschaffen werden.

RFID-Leser 12 und Laserscanner 14 werden nur in groben Zügen erläutert, da solche Geräte für sich bekannt sind.

Aufgabe des RFID-Lesers 12 ist das Auslesen von RFID-Informationen von Transpondern in einem Lesebereich sowie das Bereitstellen der dabei erfassten RFID-Signale, um damit eine Abstandsmessung des sendenden Transponders vorzunehmen. Der Laserscanner 14 dient dazu, Objektpositionen zu erfassen, insbesondere auch über einen längeren Zeitraum durch einen Objekttracking-Algorithmus, damit die Objekte zu verschiedenen Zeitpunkten wiedererkannt werden und deren Trajektorie rekonstruiert werden kann. Alternativ zu einer Erfassung durch den Laserscanner 14 können Objektpositionen auch auf andere Weise zur Verfügung gestellt werden, etwa als zeitlich aufgelöste Trajektorien von unbekannten Objekten oder als allgemeine Informationen, die in Trajektorienhypothesen umgerechnet werden können. Beispielsweise werden bei Anwendung an einer Förderanlage aus Encoderdaten des Förderers und der zeitlichen Information einer durch eintretende Objekte ausgelösten Lichtschranke eine oder mehrere hypothetische Trajektorien berechnet. Ein anderes Beispiel ist ein Eigenpositionierungssystem etwa eines führerlosen Transportsystems (AGV, automated guided vehicle) oder eines anderen Fahrzeugs, welches die eigene Bewegungsbahn anstelle des Laserscanners 14 an die Steuer- und Auswertungseinheit 16 der Vorrichtung 10 übergibt.

Die Steuer- und Auswertungseinheit 16 kann damit auf folgende Eingangsdaten zugreifen: von dem RFID-Leser 12 RFID-Informationen insbesondere einschließlich eindeutiger Identifikationsnummern der Transponder, von denen die jeweiligen RFID-Informationen gelesen wurden sowie das RFID-Signal oder ein Kennzeichen des RFID-Signals wie dessen Phase, Laufzeit oder RSSI und von dem Laserscanner 14 Objektpositionen, insbesondere zeitabhängig beziehungsweise als Trajektorien. Diese Eingangsdaten werden in einer Lokalisierungseinrichtung 18 verwendet, um Transponderpositionen zu bestimmen, und anschließend werden die Objektpositionen und die Transponderpositionen in einer Zuordnungseinrichtung 20 genutzt, um Objekte und Transponder einander nach vorgegebenen Optimierungskriterien zuzuordnen. Danach sind die Objekte aufgrund der RFID-Informationen eindeutig identifiziert und aufgrund der genauen Objektpositionen des Laserscanners 14 auch präzise lokalisiert. Die Arbeitsweise der Lokalisierungseinrichtung 18 und der Zuordnungseinrichtung 20 wird im Folgenden näher erläutert.

Figur 2 zeigt eine Draufsicht auf eine beispielhafte Anordnung der Vorrichtung 10 mit RFID-Leser 12 und Laserscanner 14 an einem Bereich mit mehreren Objekten 22a-c, die jeweils einen Transponder 24a-c tragen. Die Steuer- und Auswertungseinheit 16 ist der Übersichtlichkeit halber nicht mit dargestellt oder in RFID-Leser 12 beziehungsweise Laserscanner 14 integriert. Pfeile bezeichnen die Bewegungsrichtung der Objekte 22a-c, von denen sich nur einige durch eine von Wänden 26 abgegrenzte Öffnung bewegen. In vielen Anwendungen sind nur solche Objekte 22a-b für die Vorrichtung 10 von Interesse, aber es werden regelmäßig auch andere Objekte 22c von dem Laserscanner 14 und insbesondere dem schlecht vollständig auf ein bestimmtes Lesefeld abschirmbaren RFID-Leser 12 erfasst.

Der Laserscanner 14 erfasst in seinem konfigurierbaren und hier beispielhaft auf 90° begrenzten Überwachungsbereich 28 die Positionen der Objekte 22a-b. Die Abtastungen sind durch Punkte unter den Objekten 22a-b angedeutet. Andererseits liest der RFID-Leser 12 RFID-Informationen von Transpondern 24a innerhalb seines Lesebereichs 30. In der Praxis ist der Lesebereich 30 keineswegs so eng begrenzbar wie dargestellt. Es kann also keineswegs ausgeschlossen werden, dass auch andere Transponder 24b,c außerhalb des vorgesehenen Lesebereichs 30 ausgelesen werden. Umgekehrt kann es auch Erfassungen von Objekten 22b durch den Laserscanner 14 geben, deren Transponder 24b nicht gelesen wird.

Zusätzlich zu dem Lesevorgang mit Identifikation anhand auf dem Transponder 24a gespeicherter RFID-Informationen erfolgt auch eine Abstandsmessung anhand des RFID-Signals. Diese Auswertung kann in dem RFID-Leser 12 implementiert sein, wird hier aber in der Lokalisierungseinrichtung 18 der Steuer- und Auswertungseinheit beschrieben.

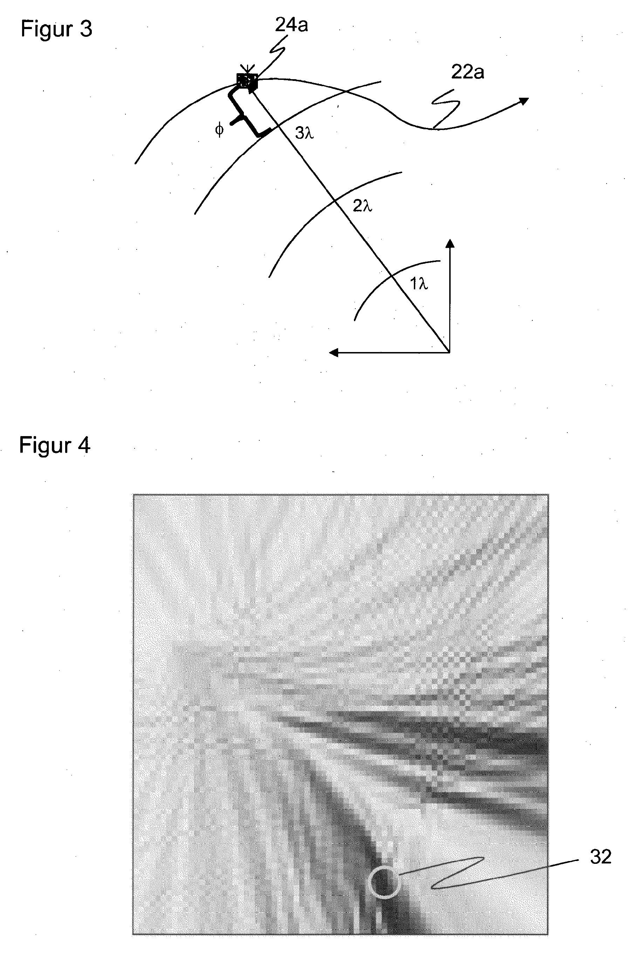

Figur 3 illustriert eine Abstandsmessung anhand der Phase des RFID-Signals. Dort ist ein Koordinatensystem so definiert, dass sich der RFID-Leser 12 in dessen Ursprung befindet. Die aus dem RFID-Signal bestimmte Phase φ, genauer die Restphase modulo 2π=λ, ist ein Maß für den Abstand, enthält aber noch eine Mehrdeutigkeit. Es ist aus einer Messung der Phase φ allein nicht entscheidbar, zu welchem der eingezeichneten Kreislinien der Transponder 24a um eine der Phase φ entsprechende Entfernung beabstandet ist. Selbst eine eindeutige Abstandsmessung würde den Ort des Transponders 24a nur auf eine Kreislinie festlegen, da eine Winkelinformation fehlt. Die Trajektorie des Objekts 22a dagegen ist durch das Objekttracking des Laserscanner 14 bekannt. Die Aufgabe der Lokalisierungseinrichtung 18 ist nun, aus dem RFID-Signal auch die Transponderposition zumindest so genau abzuleiten, dass eine Zuordnung von Objekt 22a und Transponder 24a anhand der Objektpositionen und der Transponderpositionen möglich wird.

Diese Auswertung der Phasenmessung in der Lokalisierungseinrichtung 18 geschieht anhand einer holografischen Lokalisierung. Dabei wird wiederholt die Phase φ in verschiedenen Stadien der Bewegung des Objekts 22a längs seiner Trajektorie bestimmt. Aus jeder Einzelmessung werden Orte bestimmt, an denen sich der Transponder 24a gemäß der bestimmten Phase φ mit hoher Wahrscheinlichkeit befindet. Dabei ergeben sich beispielsweise konzentrische Kreisringe im Abstand λ zueinander. Die Bereiche zwischen den Kreisringen dagegen haben nur eine geringe Aufenthaltswahrscheinlichkeit, denn diese Orte der Transponder 24a sind mit der Phase φ der Einzelmessung nicht oder nur schlecht verträglich. Wird der Abstand nicht durch eine Phasenmessung, sondern auf andere Weise gemessen, etwa durch Signallaufzeit oder RSSI, so entfällt die Mehrdeutigkeit in Abstandsrichtung, nicht jedoch in Winkelrichtung.

Um nun das Ergebnis mehrerer Einzelmessungen gemeinsam auszuwerten, wird ein Wahrscheinlichkeitsgitter gebildet, das zunächst eine leere 2D-Karte mit Bins oder Pixeln ist, die jeweils einen Ort des Transponders 24a innerhalb des Lesebereichs 30 repräsentieren. In dem Wahrscheinlichkeitsgitter werden nach und nach die Aufenthaltswahrscheinlichkeiten aus den Einzelmessungen überlagert. Im Schnittpunkt der Kreislinien der Einzelmessungen wird diese Überlagerung zu konstruktiver Verstärkung führen, in den Zwischenbereichen dagegen zu destruktiver Überlagerung oder zumindest einem Ausmitteln. Deshalb kann der Transponder 24a dort lokalisiert werden, wo nach mehreren Einzelmessungen die Aufenthaltswahrscheinlichkeit am höchsten ist.

Figur 4 zeigt ein beispielhaftes Wahrscheinlichkeitsgitter nach einer Vielzahl von Einzelmessungen, wobei die Wahrscheinlichkeiten schwarz-weiß-codiert sind. Ein Kringel 32 bezeichnet den Ort der höchsten Wahrscheinlichkeit und damit die rekonstruierte Transponderposition.

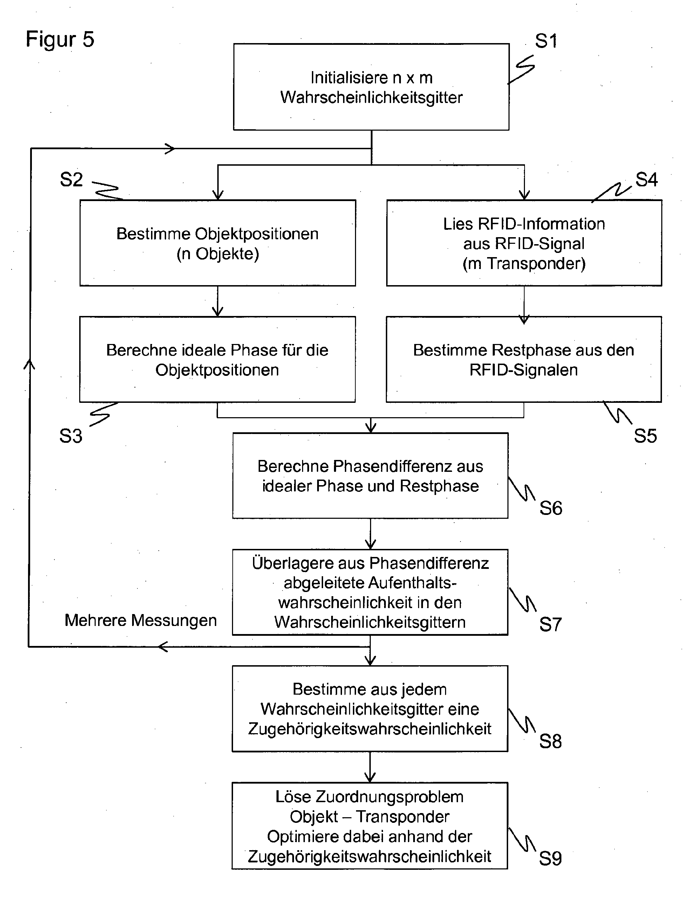

Anhand des Ablaufdiagramms der Figur 5 werden nach dieser Übersichtsdarstellung der holografischen Lokalisation noch einmal die einzelnen Schritte zum Identifizieren und Lokalisieren in einer beispielhaften Ausführungsform der Erfindung näher erläutert.

In einem Schritt S1 werden die Wahrscheinlichkeitsgitter initialisiert. Jedes Wahrscheinlichkeitsgitter entspricht einer Zuordnungshypothese für ein bestimmtes Objekt 22 und einen bestimmten Transponder 24. Dementsprechend werden in dem Wahrscheinlichkeitsgitter (i,j) für den j-ten Transponder 24 die auf das i-te Objekt 22 bezogenen Restphasen φ überlagert. Soll für jede denkbare Zuordnung für n Objekte 22 und m Transponder 24 eine Hypothese aufgestellt werden, so sind demnach n x m Wahrscheinlichkeitsgitter erforderlich. Bei Änderung der Anzahl Objekte 22 oder Transponder 24 in dem Überwachungsbereich 28 beziehungsweise dem Lesebereich 30 müsste auch die Anzahl der Wahrscheinlichkeitsgitter neu angepasst werden, die weitere Beschreibung geht aber zumindest bis zum Abschluss der Identifikation und Lokalisation von einer konstanten Anzahl Objekte 22 und Transponder 24 aus.

In einem linken Zweig des Ablaufdiagramms bestimmt in einem Schritt S2 der Laserscanner 14 die Objektpositionen. Durch einen Objekttracking-Algorithmus wird sichergestellt, dass die n Objekte zu verschiedenen Zeitpunkten wiedererkannt werden. Anschließend werden in einem Schritt S3 aus den Objektpositionen theoretische oder ideale Restphasen berechnet. Die ideale Restphase ist diejenige Restphase, die der RFID-Leser 12 in theoretischer Betrachtung aus einem RFID-Signal von einem Transponder an der Objektposition messen würde.

In einem rechten Zweig des Ablaufdiagramms liest in einem Schritt S4 der RFID-Leser 12 RFID-Informationen aus den m Transpondern. Dadurch sind die Transponder identifiziert, und es können ihnen praktisch beliebige zusätzliche Eigenschaften zugeordnet werden, die auf den Transpondern gespeichert sind. Zusätzlich werden in einem Schritt S5 die Restphasen φ aus den jeweiligen RFID-Signalen der Transponder bestimmt, um zunächst die Abstände und daraus unter Einbeziehung der nachfolgende Schritte nach mehreren Messungen auch die vollständigen Transponderpositionen zu erfassen.

In einem Schritt S6 wird die holografische Lokalisation weiter vorbereitet, indem eine Phasendifferenz zwischen den in Schritt S3 aus den Objektpositionen berechneten idealen Restphasen und den in Schritt S5 in den RFID-Signalen gemessenen Restphasen φ gebildet wird. Durch diese Differenzbildung werden die in Schritt S5 aus der Position des RFID-Lesers 12 gemessenen Restphase φ auf die Objektpositionen bezogen. Dadurch kann die holografische Lokalisierung von den Objektpositionen statt von der Position des RFID-Lesers 12 ausgehen. Anschaulich gesprochen bilden also statt der üblicherweise fixen Position des RFID-Lesers 12 die jeweiligen, sich mit der Zeit längs der Trajektorien verändernden Objektpositionen, die im Objekttracking bestimmt wurden, die Mittelpunkte der Kreislinien höchster Aufenthaltswahrscheinlichkeit. Dadurch können sich die zu unterschiedlichen Zeitpunkten in das Wahrscheinlichkeitsgitter überlagerten Kreislinien untereinander schneiden und so konstruktiv überlagern, während sie bei Bezug auf eine fixe Position stets konzentrisch zueinander lägen und es damit keinen ausgezeichneten Pixel des Wahrscheinlichkeitsgitters geben würde, welcher der gesuchten Lokalisierung entspricht.

In einem Schritt S7 werden die soeben in Schritt S6 aus der aktuellen Einzelmessung berechneten Phasendifferenzen in das Wahrscheinlichkeitsgitter überlagert. Dabei werden für gemäß der Phasendifferenzen hohe Aufenthaltswahrscheinlichkeiten entsprechend große und für niedrige Aufenthaltswahrscheinlichkeiten geringe oder sogar negative Beträge addiert. Eine bevorzugte Ausführungsform weist Kreislinien mit Radien entsprechend φ+i*λ eine hohe und allen Zwischenbereichen eine niedrige Aufenthaltswahrscheinlichkeit zu. Es ist aber auch möglich, die Aufenthaltswahrscheinlichkeit radial zu modulieren, sinnvollerweise mit Periode λ und Phase φ, oder eine andere geeignete Ortsverteilung der Aufenthaltswahrscheinlichkeit zu verwenden.

Die in den Schritten S2 bis S7 beschriebene Überlagerung einer Einzelmessung in die Wahrscheinlichkeitsgitter wird für eine feste Anzahl von mindestens zwei oder drei, praktisch bewährt ungefähr zehn Messungen wiederholt, damit sich wie in Figur 4 beispielhaft in dem Kringel 32 gezeigt ein Pixel oder eine Region mit ausreichend großer Aufenthaltswahrscheinlichkeit abzeichnet. Anstelle einer festen Anzahl Iterationen kann auch vor jeder Wiederholung geprüft werden, etwa mit einer Schwellbewertung, ob die erreichte holografische Lokalisation bereits ausreicht, und die Schleife dann abgebrochen wird. Weiterhin ist denkbar, die Wiederholungen ständig fortzusetzen, um die maximal mögliche Messinformation zu erhalten. Dann können aber zwischenzeitlich durch die folgenden Schritte S8 und S9 aktuell schon erreichte Zwischenergebnisse der Zuordnung, Identifikation und Lokalisation berechnet und angezeigt oder an einer Schnittstelle zur Verfügung gestellt werden.

Sobald aufgrund eines der genannten Kriterien die Wahrscheinlichkeitsgitter eine weitere Auswertung erlauben, wird in einem Schritt S8 aus jedem Wahrscheinlichkeitsgitter eine hier als globales Maß bezeichnete zusammenfassende Wahrscheinlichkeit oder Bewertung für die von dem Wahrscheinlichkeitsgitter repräsentierte Hypothese gebildet, dass Objekt i und Transponder j einander zuzuordnen sind. Das globale Maß ist beispielsweise das höchstwertigste Pixel in dem Wahrscheinlichkeitsgitter oder die Integration über eine kleine Nachbarschaft, die in Summe die höchste Wahrscheinlichkeit solcher Nachbarschaften bildet. In dem nun mehrfach verwendeten Beispiel von Kreislinien höher Aufenthaltswahrscheinlichkeit entspricht das dem Schnittpunkt aller oder jedenfalls möglichst vieler Kreislinien aus den Einzelmessungen. Figur 4 zeigt dieses Pixel beziehungsweise diese Nachbarschaft in einem Beispiel innerhalb des Kringels 32.

Eine Besonderheit ergibt sich daraus, dass die holografische Lokalisation auf die Objektpositionen bezogen ist. Das höchstwertigste Pixel zeigt sich deshalb nicht wie naiv vielleicht zu erwarten an der Transponderposition, da ja die Transponderposition im Gegenteil definitions- und vorgehensgemäß die Mittelpunkte der Kreislinien bestimmt. Es wird also umgekehrt aus Sicht des Transponders die Position des RFID-Lesers 12 lokalisiert. Die damit gewonnene Lokalisierungsinformation ist äquivalent. Es ergibt sich aber ein Vorteil daraus, dass sich für plausible Hypothesen eine hohe Aufenthaltswahrscheinlichkeit nur an der Position des RFID-Lesers 12 akkumulieren kann. Das bedeutet nämlich, dass in einer bevorzugten Ausführungsform die Suche nach dem höchstwertigsten Pixel oder sogar bereits das Ausbilden der Wahrscheinlichkeitsgitter insgesamt auf eine Umgebung der Position des RFID-Lesers 12 beschränkt werden kann. Dadurch verringert sich der Rechen- und Speicheraufwand in ganz erheblichem Maße. Es kann außerdem noch die Position des RFID-Lesers 12 in den Ursprung der Wahrscheinlichkeitsgitter gelegt werden, um die Berechnungen weiter zu vereinfachen.

Nach dem Schritt S8 liegt dann für alle Hypothesen "Transponder j gehört zu Objekt i" eine insbesondere skalare Bewertungszahl vor, wie wahrscheinlich diese Hypothese zutrifft.

Mit diesen Bewertungszahlen wird nun in einem Schritt S9 ein gewichtetes Zuordnungsproblem gestellt. Gesucht ist dabei diejenige Zuordnung von Objekten zu Transpondern, die in sich konsistent und als Ganzes, gemessen an einer Kostenfunktion, die auf den Bewertungszahlen aus Schritt S8 basiert, am wahrscheinlichsten zutrifft. In sich konsistent bedeutet beispielsweise, dass sich weder ein Objekt noch ein Transponder gleichzeitig an mehreren Orten befinden kann. Außerdem können Randbedingungen gestellt werden, wie dass jedes Objekt eineindeutig genau einem Transponder zuzuordnen ist, jedes Objekt mindestens einen Transponder und/oder nicht mehr als eine bestimmte Anzahl von Transpondern trägt, oder dass ein Transponder zumindest dann, wenn seine Transponderposition innerhalb des Überwachungsbereichs 28 bestimmt wurde, nicht isoliert ohne Objekt bleiben kann. Die Kostenfunktion kann direkt die Bewertungszahl abbilden. Wenn dann beispielsweise die Bewertungszahl als Wahrscheinlichkeit berechnet wurde, dann bewertet die Kostenfunktion eine Zuordnung als Ganzes einfach als Produkt dieser Wahrscheinlichkeiten. Dieser direkte Zusammenhang ist aber keineswegs notwendig, die Kostenfunktion kann auch andere Gewichtungen vornehmen, wie dass unwahrscheinliche Hypothesen möglichst nicht als wahr angenommen werden, und zwar in stärkerem Maß als durch die Bewertungszahl angegeben, oder hochwahrscheinliche Hypothesen wenn irgend konsistent möglich als wahr angenommen werden. Mögliche Algorithmen für das beschriebene gewichtete Zuordnungsproblem sind für sich im Stand der Technik bekannt, beispielsweise die ungarische Methode beziehungsweise der Kuhn-Munkres-Algorithmus, und werden hier deshalb nicht weiter erläutert.

Als Ergebnis des anhand der Figur 5 beschriebenen Verfahrens sind nun die Objekte und Transponder einander zugeordnet. Das bedeutet, dass nun für jedes Objekt zugleich die hochgenaue Objektposition und sogar gesamte Trajektorie durch die Messung des Laserscanners 14 und die eindeutige Identifikation aufgrund der von dem RFID-Leser 12 aus dem Transponder gelesenen Informationen bekannt ist. Die Lokalisierungs- und Identifizierungsinformationen können ebenso an der Vorrichtung 10 oder einem mindestens mittelbar damit verbundenen Monitor angezeigt oder über Schnittstellen an weitere Steuerungssysteme ausgegeben werden. Mit der Identifikation können praktisch beliebige weitere Informationen aus dem Transponder ausgelesen oder anhand der Identifikation aus einer Datenbank gelesen werden. Erfolgt der Zugriff sogar auf eine Datenbank über ein Netzwerk, können damit dem Objekt unbegrenzt Informationen zugewiesen oder umgekehrt von der Vorrichtung 10 gewonnene Informationen über das Objekt weitergegeben werden.

## Patentansprüche

1. Vorrichtung (10) zum Identifizieren und Lokalisieren von Objekten (22) mit einer Positionsbestimmungseinrichtung (14) zum Bestimmen von Objektpositionen und einer RFID-Leseeinrichtung (12) zum Empfangen eines RFID-Signals von einem RFID-Transponder (24) und zum Auslesen einer RFID-Information aus dem RFID-Signal,
**dadurch gekennzeichnet,**
**dass** die Vorrichtung (10) eine RFID-Lokalisierungseinrichtung (18) zum Bestimmen von Transponderpositionen mit Hilfe des RFID-Signals aufweist, die dafür ausgebildet ist, zum Bestimmen einer Transponderposition zu mehreren Zeitpunkten eine Abstandsinformation aus dem RFID-Signal eines Transponders (24) zu bestimmen, aus der Abstandsinformation Aufenthaltswahrscheinlichkeiten abzuleiten und in einem Wahrscheinlichkeitsgitter zu überlagern, wobei das Wahrscheinlichkeitsgitter Pixel einer Größe entsprechend einer gewünschten Ortsauflösung aufweist, in die eingetragen wird, wie wahrscheinlich es anhand der Abstandsinformation ist, dass sich eine Signalquelle an dem von dem Pixel repräsentierten Ort befindet, und dass die Vorrichtung (10) weiterhin eine Zuordnungseinrichtung (20) aufweist, die dafür ausgebildet ist, Objekte (22) und RFID-Transponder (24) einander anhand der Objektpositionen und der Transponderpositionen zuzuordnen.

2. Vorrichtung (10) nach Anspruch 1,
wobei die Positionsbestimmungseinrichtung (14) einen Laserscanner aufweist.

3. Vorrichtung (10) nach Anspruch 1 oder 2,
wobei die Positionsbestimmungseinrichtung (14) für ein Objekttracking ausgebildet ist.

4. Vorrichtung (10) nach einem der vorhergehenden Ansprüche,
wobei die RFID-Lokalisierungseinrichtung (18) für eine Phasenmessung zur Abstandsbestimmung ausgebildet ist.

5. Vorrichtung (10) nach einem der vorhergehenden Ansprüche,
wobei die RFID-Lokalisierungseinrichtung (18) dafür ausgebildet ist, die Abstandsinformation auf eine Objektposition zu beziehen.

6. Vorrichtung (10) nach einem der vorhergehenden Ansprüche,
wobei die RFID-Lokalisierungseinrichtung (18) dafür ausgebildet ist, die Abstandsinformation auf eine Objektposition zu beziehen, indem aus der Objektposition eine dem Abstand zwischen Objekt (22) und RFID-Leseeinrichtung (12) entsprechende ideale Phase und dann die Phasendifferenz zwischen idealer Phase und Phase des RFID-Signals berechnet wird.

7. Vorrichtung (10) nach einem der vorhergehenden Ansprüche,
wobei die RFID-Lokalisierungseinrichtung (18) dafür ausgebildet ist, jeweils ein Wahrscheinlichkeitsgitter je Objekt (22) und RFID-Transponder (24) zu bilden.

8. Vorrichtung (10) nach einem der vorhergehenden Ansprüche,
wobei die RFID-Lokalisierungseinrichtung (18) dafür ausgebildet ist, ein globales Maß eines Wahrscheinlichkeitsgitters zu bestimmen.

9. Vorrichtung (10) nach einem der vorhergehenden Ansprüche,
wobei die RFID-Lokalisierungseinrichtung (18) dafür ausgebildet ist, ein Wahrscheinlichkeitsgitter nur für eine Umgebung einer Position der RFID-Leseeinrichtung (12) zu bilden und/oder auszuwerten.

10. Vorrichtung (10) nach Anspruch 9,
wobei die Zuordnungseinrichtung (20) dafür ausgebildet ist, bei der Zuordnung von Objekten (22) und RFID-Transpondern (24) eine auf dem globalen Maß basierende Kostenfunktion zu optimieren.

11. Vorrichtung (10) nach einem der vorhergehenden Ansprüche,
wobei die Positionsbestimmungseinrichtung (14) dafür ausgebildet ist, Konturinformationen der Objekte (22) zu bestimmen, und wobei die Zuordnungseinrichtung (20) die Konturinformationen bei der Zuordnung von Objekten (22) und RFID-Transpondern (24) einbezieht.

12. Verfahren zum Identifizieren und Lokalisieren von Objekten (22), bei dem ein RFID-Signal eines RFID-Transponders (24) von einem RFID-Leser (12) empfangen und eine RFID-Information aus dem RFID-Signal ausgelesen wird und bei dem unabhängig von dem RFID-Signal Objektpositionen der Objekte (22) bestimmt werden, insbesondere mittels eines Laserscanners (14) mit Objekttracking,
**dadurch gekennzeichnet,**
**dass** mit Hilfe des RFID-Signals Transponderpositionen bestimmt werden, wobei für jedes mögliche Paar eines Objekts (22) und eines RFID-Transponders (24) ein Wahrscheinlichkeitsgitter gebildet wird, in dem aus mehreren Auswertungen der Phase des RFID-Signals zu verschiedenen Zeitpunkten Aufenthaltswahrscheinlichkeiten überlagert werden, wobei das Wahrscheinlichkeitsgitter Pixel einer Größe entsprechend einer gewünschten Ortsauflösung aufweist, in die eingetragen wird, wie wahrscheinlich es anhand der Abstandsinformation ist, dass sich eine Signalquelle an dem von dem Pixel repräsentierten Ort befindet, und dass die Objekte (22) und RFID-Transponder (24) einander anhand der Objektpositionen und der Transponderpositionen zugeordnet werden.

13. Verfahren nach Anspruch 12,
wobei eine hohe Aufenthaltswahrscheinlichkeit jeweils an Orten besteht, die der Phasendifferenz aus einer dem Abstand zwischen Objekt (22) und RFID-Leseeinrichtung (12) entsprechenden idealen Phase und der Phase des RFID-Signals entsprechen.

14. Verfahren nach Anspruch 13,
wobei aus den Wahrscheinlichkeitsgittern jeweils ein globales Maß für die Wahrscheinlichkeit bestimmt wird, dass derjenige RFID-Transponder (24) und dasjenige Objekt (22) zusammengehören, zu dem das Wahrscheinlichkeitsgitter gebildet wurde, und wobei bei der Zuordnung von Objekten (22) und RFID-Transpondern (24) eine Kostenfunktion optimiert wird, die auf den globalen Maßen basiert.

## Claims

1. An apparatus (10) for identifying and localizing objects (22), having a position determination device (14) for determining object positions and having an RFID reading device (12) for receiving an RFID signal from an RFID transponder (24) and for reading RFID information from the RFID signal,
**characterized in that** the apparatus (10) comprises an RFID localization device (18) for determining transponder positions with the aid of the RFID signal which is configured, for determining a transponder position, to determine distance information from the RFID signal of a transponder (24) at a plurality of times, to derive probabilities of presence at a location from the distance information and to superpose them in a probability grid, wherein the probability grid has pixels of a size corresponding to a desired spatial resolution, and it is entered in the pixels how probable it is according to the distance information that a signal source is located at the location represented by the pixel, and **in that** the apparatus (10) further comprises an association device (20) which is configured to associate objects (22) and RFID transponders (24) with one another with reference to the object positions and the transponder positions.

2. The apparatus (10) in accordance with claim 1,
wherein the position determination (14) device comprises a laser scanner.

3. The apparatus (10) in accordance with claim 1 or 2,
wherein the position determination device (14) is configured for an object tracking.

4. The apparatus (10) in accordance with any of the preceding claims, wherein the RFID localization device (18) is configured for a phase measurement for the distance determination.

5. The apparatus (10) in accordance with any of the preceding claims, wherein the RFID localization device (18) is configured to relate the distance information to an object position.

6. The apparatus in accordance with any of the preceding claims,
wherein the RFID localization device (18) is configured to relate the distance information to an object position in that an ideal phase corresponding to the distance between the object (22) and the RFID reading device (12) is calculated from the object position and the phase difference between the ideal phase and the phase of the RFID signal is then calculated.

7. The apparatus (10) in accordance with any of the preceding claims, wherein the RFID localization device (18) is configured respectively to form a probability grid per object (22) and RFID transponder (24).

8. The apparatus (10) in accordance with any of the preceding claims, wherein the RFID localization device (18) is configured to determine a global measure of a probability grid.

9. The apparatus (10) in accordance with any of the preceding claims, wherein the RFID localization device (18) is configured to form and/or evaluate a probability grid only for an environment of a position of the RFID reading device (12).

10. The apparatus (10) in accordance with claim 9,
wherein the association device (20) is configured to optimize a cost function based on the global measure on the association of objects (22) and RFID transponders (24).

11. The apparatus (10) in accordance with any of the preceding claims,
wherein the position determination device (14) is configured to determine contour information of the objects (22), and wherein the association device (20) includes the contour information on the association of objects (22) and RFID transponders (24).

12. A method for identifying and localizing objects (22), wherein an RFID signal of an RFID transponder (24) is received by an RFID reader (12) and RFID information is read from the RFID signal and wherein object positions of the objects (22) are determined independently of the RFID signal, in particular by means of a laser scanner (14) with object tracking,
**characterized in that** transponder positions are determined with the aid of the RFID signal, wherein for every possible pair of an object (22) and an RFID transponder (24) a probability grid is formed wherein from a plurality of evaluations of the phase of the RFID signal at different times probabilities of presence at a location are superposed, wherein the probability grid has pixels of a size corresponding to a desired spatial resolution, and it is entered in the pixels how probable it is according to the distance information that a signal source is located at the location represented by the pixel, and **in that** the objects (22) and the RFID transponders (24) are associated with one another with reference to the object positions and to the transponder positions

13. The method in accordance with claim 12,
wherein a high probability of presence at a location respectively is present at locations which correspond to the phase difference from an ideal phase corresponding to the distance between the object (22) and the RFID reading device (12) and the phase of the RFID signal.

14. The method in accordance with claim 13,
wherein a respective global measure is determined from the probability grids for the probability that that RFID transponder (24) and that object (22) belong together with respect to which the probability grid was formed, and wherein on the association of objects (22) and RFID transponders (24) a a cost function is optimized which is based on the global measure.

## Revendications

1. Dispositif (10) pour identifier et localiser des objets (22) comprenant un moyen de détermination de position (14) pour déterminer des positions d'objets et un moyen de lecture RFID (12) pour recevoir un signal RFID depuis un transpondeur RFID (24) et pour lire une information RFID à partir du signal RFID,
**caractérisé en ce que**
le dispositif (10) comprend un moyen de localisation RFID (18) pour déterminer des positions de transpondeurs avec l'aide du signal RFID, ledit moyens étant réalisés, afin de déterminer une position de transpondeur à plusieurs instants, pour déterminer une information de distance à partir du signal RFID d'un transpondeur (24), pour dériver à partir de l'information de distance une probabilité de présence et pour la superposer dans une grille de probabilité, dans lequel la grille de probabilité comporte des pixels d'une taille correspondant à une résolution locale souhaitée, dans laquelle on reporte le niveau de probabilité, au moyen de l'information de distance, pour qu'une source de signaux se trouve à l'emplacement représenté par le pixel, et **en ce que** le dispositif (10) comprend en outre un moyen d'association (20) qui est réalisé pour associer des objets (22) et des transpondeurs RFID (24) les uns aux autres au moyen des positions d'objets et des positions de transpondeurs.

2. Dispositif (10) selon la revendication 1,
dans lequel le moyen de détermination de position (14) comprend un scanner à laser.

3. Dispositif (10) selon la revendication 1 ou 2,
dans lequel le moyen de détermination de position (14) est réalisé pour effectuer un suivi d'objets.

4. Dispositif (10) selon l'une des revendications précédentes,
dans lequel le moyen de localisation RFID (18) est réalisé pour effectuer une mesure de phase afin de déterminer la distance.

5. Dispositif (10) selon l'une des revendications précédentes,
dans lequel le moyen de localisation RFID (18) est réalisé pour faire une référence de l'information de distance à une position d'objet.

6. Dispositif (10) selon l'une des revendications précédentes,
dans lequel le moyen de localisation RFID (18) est réalisé pour faire une référence de l'information de distance à une position d'objet, en calculant à partir de la position d'objet une phase idéale correspondant à la distance entre l'objet (22) et le moyen de lecture RFID (12), et en calculant alors la différence de phase entre la phase idéale et la phase du signal RFID.

7. Dispositif (10) selon l'une des revendications précédentes,
dans lequel le moyen de localisation RFID (18) est réalisé pour former respectivement une grille de probabilité pour chaque objet (22) et chaque transpondeur RFID (24).

8. Dispositif (10) selon l'une des revendications précédentes,
dans lequel le moyen de localisation RFID (18) est réalisé pour déterminer une mesure globale d'une grille de probabilité.

9. Dispositif (10) selon l'une des revendications précédentes,
dans lequel le moyen de localisation RFID (18) est réalisé pour former et/ou pour évaluer une grille de probabilité uniquement pour un environnement d'une position du moyen de lecture RFID (12).

10. Dispositif (10) selon la revendication 9,
dans lequel le moyen d'association (20) est réalisé, lors de l'association d'objets (22) et de transpondeurs RFID (24), pour optimiser une fonction de coût basée sur la mesure globale.

11. Dispositif (10) selon l'une des revendications précédentes,
dans lequel le moyen de détermination de position (14) est réalisé pour déterminer des informations de contours des objets (22), et dans lequel le moyen d'association (20) utilise les informations de contours lors de l'association d'objets (22) et de transpondeurs RFID (24).

12. Procédé pour identifier et localiser des objets (22), dans lequel un signal RFID d'un transpondeur RFID (24) est reçu par un lecteur RFID (12) et une information RFID est lue à partir du signal RFID et dans lequel on détermine indépendamment du signal RFID des positions des objets (22), en particulier au moyen d'un scanner à laser (14) avec suivi d'objets,
**caractérisé en ce que**
on détermine avec l'aide du signal RFID des positions de transpondeurs, dans lequel pour chaque paire possible d'un objet (22) et d'un transpondeur RFID (24) on forme une grille de probabilité dans laquelle on superpose, à partir de plusieurs évaluations de la phase du signal RFID à différents instants, des probabilités de présence, dans lequel la grille de probabilité comporte des pixels d'une taille correspondant à une résolution locale souhaitée, dans laquelle on reporte le niveau de probabilité, au moyen de l'information de distance, pour qu'une source de signaux se trouve à l'emplacement représenté par le pixel, et **en ce que** les objets (22) et les transpondeurs RFID (24) sont associés les uns aux autres au moyen des positions d'objets et des positions de transpondeurs.

13. Procédé selon la revendication 12,
dans lequel il existe une haute probabilité de présence respectivement à des emplacements qui correspondent à la différence de phase entre une phase idéale correspondant à la distance entre l'objet (22) et le moyen de lecture RFID (12) et la phase du signal RFID.

14. Procédé selon la revendication 13,
dans lequel on détermine à partir des grilles de probabilité respectivement une mesure globale pour la probabilité pour que celui des transpondeurs RFID (24) corresponde à celui des objets (22) pour lequel la grille de probabilité a été formée, et dans lequel lors de l'association d'objets (22) et de transpondeurs RFID (24) on optimise une fonction de coût qui est basée sur les mesures globales.
